# EUROPÄISCHE PATENTSCHRIFT

(11) **EP 1 771 520 B1**
(45) Veröffentlichungstag und Bekanntmachung des Hinweises auf die Patenterteilung: **24.09.2008**
(21) Anmeldenummer: 05759768.4
(22) Anmeldetag: 15.07.2005
(51) Int. Cl.: C09D 5/00, C08G 65/00

(54) **BESCHICHTUNGSMITTEL**
COATING COMPOSITION
COMPOSITION DE REVETEMENT

(30) Priorität: 16.07.2004 DE 102004034646
(43) Veröffentlichungstag der Anmeldung: 11.04.2007
(73) Patentinhaber: BASF SE, 67056 Ludwigshafen (DE)
(72) Erfinder: WULFF, Christian, 68163 Mannheim (DE); SEELMANN-EGGEBERT, Hans-Peter, 67117 Limburgerhof (DE); STUTZ, Susanne, 69469 Weinheim (DE); OETTER, Günter, 67227 Frankenthal (DE)
(74) Vertreter: Hörschler, Wolfram Johannes
(86) Internationale Anmeldenummer: PCT/EP2005/007742
(87) Internationale Veröffentlichungsnummer: WO 2006/008094

(56) Entgegenhaltungen:
- EP-A- 0 681 865
- WO-A-03/060049

## Beschreibung

Die schnelle Benetzung von Oberflächen spielt in vielen Bereichen des täglichen Lebens und in vielen industriellen Prozessen, beispielsweise bei der Reinigung oder Beschichtung von Substraten, eine zentrale Rolle. In vielen Formulierungen werden deshalb unterschiedlich große Mengen von Alkoholen wie Ethanol oder Isopropanol eingesetzt, um beispielsweise die Grenzflächen- oder Oberflächenspannung zu erniedrigen und damit das Benetzungsvermögen der Formulierungen zu verbessern. Dabei ist es üblich, wässrigen Formulierungen oft größere Mengen dieser Alkohole beizumischen. Die physiologische Wirkung der Alkohole ist allerdings bedenklich, und die Exposition des Anwenders solcher Formulierungen ist durch den hohen Dampfdruck der Alkohole hoch. Darüber hinaus tragen die Alkohole zu den flüchtigen organischen Verbindungen (VOC) bei, sie können zum Quellen von Substraten (z. B. Kunststoffe) führen, und beim Verdampfen bilden sie ggf. ein explosives Gemisch mit Luft (Ex-Schutz). Daher sollten heute beispielsweise in Formulierungen, die vom Anwender direkt gehandhabt werden, nur geringe Mengen an Alkoholen oder kein Alkohol vorliegen. Für sehr schnell netzende Formulierungen, wie Feuchthaltemittel in der Druckindustrie oder Additive für Beschichtungsformulierungen, zum Beispiel Sprühlackierungen, stellen sie jedoch immer noch einen notwendigen Bestandteil dar.

Seit einigen Jahren ist die sehr gut netzende Wirkung von sehr hydrophoben, kompakten Alkoholen, die aus Acetylen und Aldehyden hergestellt werden können, bekannt. Es handelt sich dabei insbesondere um Dihydroxyalkine. Diese Produkte sind jedoch nicht mit allen Formulierungen verträglich und können oft nur mit Hilfe von Solubilisatoren wie Cumolsulfonat, Ethylenglykol etc. verwendet werden. Oft muss dabei eine größere Menge des Solubilisators im Vergleich zum Netzhilfsmittel eingesetzt werden, so dass sich hohe Folgekosten durch die Verwendung der Dihydroxyalkine ergeben. Zudem wird die Wirkung des Netzhilfsmittels bei der Abmischung mit größeren Mengen an Solubilisatoren verschlechtert.

Ein üblicher Weg, um die Benetzungsgeschwindigkeit von wässrigen Formulierungen zu erhöhen, besteht in der Verwendung von Tensiden, die sich an Grenzflächen anlagern und dabei die Grenzflächenspannung erniedrigen. Während durch Zumischen von Alkoholen wie Ethanol oder Isopropanol zu wässrigen Formulierungen das resultierende Wasser/Lösemittel-Gemisch eine gegenüber Wasser niedrigere Oberflächenspannung aufweist und damit ein verbessertes Netzverhalten zeigt, ist die Benetzung oder Oberflächenbelegung bei Verwendung von Tensidsystemen zeitabhängig. Die Tensidmoleküle müssen zunächst an die Oberfläche diffundieren und dort einen Grenzflächenfilm aufbauen, wodurch die Grenzflächenspannung bzw. die Oberflächenspannung im Falle des Kontakts von Wasser und Luft sinkt.

Bei sehr schnellen Prozessen wie etwa Sprüh- oder Netzprozessen, und beispielsweise curtain coating-Prozessen und bei Lacken, ist die Zeit, in der die Oberflächen- oder Grenzflächenspannung durch das Tensidsystem auf den Gleichgewichtswert abgesenkt wird, entscheidend. Die Dynamik des Tensidsystems ist dabei für die Benetzungsgeschwindigkeit von großer Bedeutung.

Derzeit werden Alkoholethoxylate niedriger Alkohole als geeignete Netzmittel eingesetzt. Solche Produkte enthalten jedoch bedingt durch das Herstellungsverfahren häufig Mengen an Alkohol, der wiederum maßgeblich zur schnellen Benetzung beiträgt und gegebenenfalls bei sehr kurzen Benetzungszeiten die einzige netzende Komponente ist.

Die Verwendung von Alkylglykolalkoxylaten oder -diglykolalkoxylaten, die erhältlich sind durch Alkoxylierung von C₄₋₈-Alkylglykolen oder -diglykolen mit C₂₋₅-Alkoxiden bis zu einem mittleren Alkoxylierungsgrad von 1 bis 8, bezogen auf C₄₋₈-Alkylglykole oder - diglykole, in wässrigen Formulierungen ist aus der WO 03/60049 bekannt.

DE 102 02 007 A1 offenbart Alkylglykolalkoxylate, die erhältlich sind durch Alkoxylierung von C₄₋₈-Alkylglykolen oder -diglykolen mit C₂₋₅-Alkoxiden bis zu einem mittleren Alkoxylierungsgrad von 1 bis 8, bezogen auf C₄₋₈-Alkylglykole oder -diglykole, und deren Mischungen mit Tensiden, die in einer Menge von 5 g/l Wasser gelöst eine Grenzflächenspannung von weniger als 46 mN/m bei 20 °C zeigen, und/oder Dihydroxyalkinen oder Derivaten davon.

Bei immer schneller werdenden Prozessen der Herstellung und auch der Anwendung von Lacken spielt inzwischen nicht nur die generelle Wirksamkeit eines Netzmittels eine Rolle, sondern ganz wesentlich auch die Geschwindigkeit, mit der der gewünschte Effekt (in diesem Fall die Netzung bzw. Reduktion der Grenzflächenspannung) erzielt wird. Netzprozesse spielen sich dabei generell im Bereich von Millisekunden ab.

Darüber hinaus werden aus ökologischen Gesichtspunkten immer häufiger Beschichtungsstoffe, beispielsweise Lacke, auf Basis von Wasser als Lösungsmittel eingesetzt. Die Oberflächenspannung von Wasser ist mit ca. 72 mN/m, deutlich höher als die organischer Lösungsmittel. So liegt die Oberflächenspannung von Kohlenwasserstoffen bei ca. 25 - 35 mN/m, von Butylglykol bei 27 mN/m und von Butylacetat bei 26 mN/m. Häufig eingesetzte Mischungen wasserlöslicher organischer Lösungsmittel (wie Butylglykol) mit Wasser führen entsprechend ebenfalls zu Oberflächenspannungen, die gegenüber dem reinen organischen Lösungsmittel erhöht sind (z.B. 5% Butylglykol in Wasser = 37 mN/m).

Die Notwendigkeit der Reduktion der Grenzflächenspannung und die Schwierigkeit, dies im Bereich von Millisekunden zu leisten, verstärken sich also mit dem Übergang zu Lacken auf Wasserbasis weiter, und die Leistungsfähigkeit herkömmlicher Tenside muss verbessert werden. Auf der anderen Seite ist es für ein effizientes System wünschenswert, dass eine Verbesserung der Leistung nicht mit einer Erhöhung der Einsatzmenge einhergeht.

Die Reduktion der Grenzflächenspannung führt beispielsweise zu einer verbesserten Pigmentbenetzung, einer verbesserten Untergrundbenetzung und verbessertem Verlauf. Durch letzteres wird eine glatte Oberfläche erzeugt, was zu einer Vermeidung von Störungen führt, die als Orangenschalen-Effekt, Strukturbildung, Krater, Fischaugen, Pinselspuren, Läuferbildung, Stippenbildung oder Nadelstiche bezeichnet werden.

Aufgabe der vorliegenden Erfindung ist die Bereitstellung einer Beschichtungsmittel-Formulierung, die Mischungen von Tensiden mit weiteren Verbindungen, so genannten Boostern enthält, um so das Netzverhalten wässriger Formulierungen von Beschichtungsstoffen zu verbessern. Dies wird erzielt durch eine Verminderung der Grenzflächenspannung allgemein und insbesondere eine signifikante Erniedrigung der Grenzflächenspannung bereits nach kurzen Zeiten.

Aufgabe ist es auch, dass die in Lösung eingesetzten erfindungsgemäßen Mischungen von Tensid und Booster in den Beschichtungsstoff-Formulierungen nicht in größerer Konzentration eingesetzt werden müssen als das Tensid alleine. Der erfindungsgemäße Effekt soll sich sowohl bei Lösungen der Mischungen in Wasser als auch in Mischungen aus Wasser und organischen Lösungsmitteln einstellen. Ferner sollen die Mischungen aus Tensid und Booster schaumarm sein und die verwendeten Tenside sollen gut netzende Tenside sein.

Diese Aufgaben werden erfindungsgemäß gelöst durch eine Beschichtungsmittel-Formulierung enthaltend
(A) 0.001 - 15 Gew.-%, bevorzugt 0.01 - 10 Gew.-%, besonders bevorzugt 2 - 10 Gew.-% einer Mischung als Komponente (A) enthaltend als Komponente a1 wenigstens ein nichtionisches Tensid ausgewählt aus C₂₋₅-Alkoxylaten von C₉₋₂₀-Alkoholen, die im mittel einen Alkoxylierungsgrad von 3-30 aufweisen, und als Komponente a2 wenigstens eine Verbindung entsprechend der allgemeinen Formel (I)

   R¹-O-(CH₂-CHR²-O)ₙ-(CH₂-CH₂-O)ₘ-R³ (I),

   in der
   - R¹: optional substituiertes Phenyl, einen Rest abgeleitet von Hexanol, Butanol, Pentanol, Heptanol, Oktanol und mischungen davon
   - R²: C₁-C₈-Alkyl,
   - R³: Wasserstoff, C₁-C₆-Alkyl, Benzoyl, Acetyl, Acryl oder Methacryl,
   - n: mittlerer Wert von 0 bis 10,
   - m: mittlerer Wert von 1 bis 10, wobei n+m ≤ 10, und m > n ist, bedeuten,
   wobei die gegebenenfalls verschiedenen Alkylenoxid-Struktureinheiten statistisch verteilt oder blockweise angeordnet sein können, wobei das Verhältnis von Komponente a1 zu Komponente a2 1:4 bis 7:3 beträgt,
(B) 1 - 95 Gew.-%, bevorzugt 5 - 80 Gew.-% schichtbildende Bindemittel und Harze als Komponente (B),
(C) 0 - 80 Gew.-%, bevorzugt 0 - 60 Gew.-%, besonders bevorzugt 0 - 40 Gew.-% Füllstoffe als Komponente (C),
(D) 0 - 40 Gew.-%, bevorzugt 0 - 35 Gew.-%, besonders bevorzugt 5 - 30 Gew.-% Pigmente als Komponente (D),
(E) 0 - 20 Gew.-%, bevorzugt 0 - 10 Gew.-% weitere Additive als Komponente (E) und
(F) 0 - 90 Gew.-%, bevorzugt 0 - 70 Gew.-%, besonders bevorzugt 15 - 50 Gew.-% einer Mischung von optional organischen Lösungsmitteln und/oder Wasser als Komponente (F),
wobei die Summe der Gewichtsprozente der Komponenten (A) bis (F) 100 Gew.-% ergibt,
und die Mischung (A) in einer Konzentration von 0.2 g/l in Wasser bei 23 °C zu einer Erniedrigung des Kontaktwinkels auf Stahl im Vergleich zu reinem Wasser nach 1 s um mindestens 15°, bevorzugt mindestens 20°, führt, und die Mischung im CNOMO (prEN 14371:2004, 0.1 g/l, 25 °C, Messung in Wasser) eine Schäumfähigkeit von weniger als 1200 ml beim Umpumpvorgang erzeugt. Bevorzugt sollen die Mischungen in einer 5%igen Butylglykol-Lösung (5% Butylglykol in Wasser) eine Schäumfähigkeit von weniger als 300 ml erreichen. Insbesondere bevorzugt ist das Schaumvolumen 5 min nach Beendigung der Umwälzung bei Untersuchung der o.g. wässrigen Lösung kleiner als 300 ml und bei Untersuchung der Lösung in 5% Butylglykol kleiner als 50 ml. Gemessen werden jeweils Lösungen in einer Konzentration von 0,1 g Mischung in 1 Liter Lösung. Messtemperatur: 25 °C. Insbesondere bevorzugt sind Mischungen, die im CNOMO (prEN 14371:2004, 0.1 g/l, 25 **°**C, Messung in Wasser) eine Schäumfähigkeit von weniger als 300 ml beim Umpumpvorgang erzeugen.

R¹ ist ein Rest, des sich von den folgenden Alkoholen ableitet: Hexanol, Butanol, davon besonders n-Butanol und Isobutanol, Pentanol, tert.-Amylalkohol, Heptanol, Oktanol, besonders n-Oktanole, 2-Ethylhexanol, und Mischungen davon oder ein optional substituierter Phenylrest.

Als Substituenten des Phenylrestes können lineare oder verzweigte C₁-C₁₄-Alkylreste, optional substituiert durch eine oder mehrere funktionelle Gruppen ausgewählt aus der . Gruppe bestehend aus Amido-, Imido-, Carbonsäureester-, Halogenid-, und EtherGruppe, vorhanden sein. Bevorzugt sind optional vorhandene C₁-C₁₄-Alkylreste, bevorzugt C₁-C₉-Alkylreste, nicht substituiert.

Der Rest R² bedeutet in der allgemeinen Formel (I) C₁-C₈-Alkyl. Bevorzugt bedeutet R² C₁-C₃-Alkyl, besonders bevorzugt bedeutet R² Methyl.

Der Rest R³ bedeutet in der allgemeinen Formel (I) Wasserstoff, C₁-C₆-Alkyl, Benzoyl, Acetyl, Acryl oder Methacryl, bevorzugt Wasserstoff, Methyl oder Butyl, besonders bevorzugt Wasserstoff oder Methyl. Der Rest R³ dient, wenn er ungleich Wasserstoff ist, als so genannter Endgruppenverschluss zur Stabilisierung des Produktes, beispielsweise bei der Verwendung in alkalischer Lösung. In einer bevorzugten Ausführungsform bedeutet R³ Wasserstoff.

Die Alkylenoxidblöcke (CH₂-CHR²-O) und (CH₂-CH₂-O) stehen für Struktureinheiten, die durch Alkoxylierung der entsprechenden Alkohole R¹-OH hergestellt werden durch Umsetzung mit einer Verbindung ausgewählt aus der Gruppe bestehend aus Ethylenoxid, Propylenoxid, Butylenoxid, Pentylenoxid, Hexylenoxid, Heptylenoxid, Octylenoxid, Nonylenoxid, Decylenoxid und Mischungen davon, bevorzugt ausgewählt aus der Gruppe bestehend aus Ethylenoxid, Propylenoxid, Butylenoxid und Mischungen davon, besonders bevorzugt ausgewählt aus Ethylenoxid, Propylenoxid und Mischungen davon. Werden unterschiedliche Alkylenoxide eingesetzt, so kann die Umsetzung mit den unterschiedlichen Alkylenoxiden blockweise (nacheinander bzw. abwechselnd) oder gleichzeitig (random oder Mischfahrweise) durchgeführt werden.

n beschreibt die Anzahl der Einheiten (CH₂-CHR²-O), und m beschreibt die Anzahl der Einheiten (CH₂-CH₂-O) in den Verbindungen der allgemeinen Formel (I). In den Verbindungen der allgemeinen Formel (I) hat n einen mittleren Wert von 0 bis 10. m hat in den Verbindungen der allgemeinen Formel (I) einen mittleren Wert von 1 bis 10. Die Summe von n und m ist ≤ 10 und m ist > n.

In einer bevorzugten Ausführungsform bedeuten n einen mittleren Wert ≤ 2 und m einen mittleren Wert von 3 bis 10.

In einer weiteren bevorzugten Ausführungsform bedeutet in der Verbindung der allgemeinen Formel (I) n = 0 und m = 3 - 9, wenn R¹ Phenyl bedeutet.

In einer weiteren bevorzugten Ausführungsform bedeutet in der Verbindung der allgemeinen Formel (I) n ≤ 2 und m = 3 - 6, wenn R¹ sich von den folgenden Alkoholen ableitet: Hexanol, Butanol, davon besonders n-Butanol und Isobutanol, Pentanol, tert.-Amylalkohol, Heptanol, Oktanol, besonders n-Oktanole, 2-Ethylhexanol, und Mischungen davon.

Die Werte n und m stellen mittlere Werte dar, da bei der Alkoxylierung von Alkoholen in der Regel eine Verteilung des Alkoxylierungsgrades erhalten wird. Daher können n und m von ganzzahligen Werten abweichen. Die Verteilung des Alkoxylierungsgrades kann in gewissem Umfang durch Einsatz unterschiedlicher Alkoxylierungskatalysatoren eingestellt werden. Werden neben Ethylenoxid auch ein oder mehrere längerkettige Alkylenoxide eingesetzt, so können die unterschiedlichen Alkylenoxid-Struktureinheiten statistisch verteilt sein, alternierend oder in Form zweier oder mehrerer Blöcke in beliebiger Reihenfolge vorliegen. Der Mittelwert der homologen Verteilung wird durch die angegebenen Zahlen n und m dargestellt.

Die Alkylenoxidblöcke bestehen bevorzugt nur aus Ethylenoxid-Einheiten.

Ganz besonders bevorzugt werden als Verbindungen der allgemeinen Formel (I) die folgenden eingesetzt:
Butanol + 3 EO, Butanol + 4 EO, Butanol + 5 EO, Butanol + 6 EO, Hexanol + 3 EO, Hexanol + 4 EO, Hexanol + 5 EO, Hexanol + 6 EO, Phenol + 3 EO, Phenol + 4 EO, Phenol + 5 EO, Phenol + 6 EO

Die angegebenen Werte für die Menge an EO sind gerundet. Insbesondere sind die o.g. Verbindungen auf Basis von Hexanol und Phenol bevorzugt.

Die erfindungsgemäßen Verbindungen der allgemeinen Formel (I) werden beispielsweise durch Alkoxylierung von Alkoholen der allgemeinen Formel R¹-OH mit Alkylenoxiden, die den Einheiten (CH₂-CHR²-O) und (CH₂-CH₂-O) in A entsprechen, erhalten.

Dabei kann sich an die Alkoxylierung eine Veretherung, z.B. mit Dimethylsulfat, oder Veresterung anschließen, wenn der Rest R³ nicht Wasserstoff ist.

Die Alkoxylierung kann beispielsweise unter Verwendung von alkalischen Katalysatoren wie Alkalihydroxiden oder Alkalialkoholaten durchgeführt werden. Durch den Einsatz dieser Katalysatoren resultieren spezielle Eigenschaften, insbesondere die Verteilung des Alkoxylierungsgrades.

Die Alkoxylierung kann zudem unter Verwendung von Lewis-saurer Katalyse mit den daraus resultierenden speziellen Eigenschaften durchgeführt werden, insbesondere in Gegenwart von BF₃ x H₃PO₄, BF₃ Dietherat, BF₃, SbCl₅, SnCl₄ x 2 H₂O, Hydrotalcit. Geeignet als Katalysator sind auch Doppelmetallcyanid (DMC)-Verbindungen.

Dabei kann der überschüssige Alkohol abdestilliert werden, oder das Alkoxylat kann durch einen Zwei-Stufen-Prozess gewonnen werden. Auch die Herstellung gemischter Alkoxylate aus beispielsweise Ethylenoxid (EO) und Propylenoxid (PO) ist möglich, wobei sich an den Alkoholrest zunächst ein Propylenoxid-Block und anschließend ein Ethylenoxid-Block anschließen können, oder zunächst ein Ethylenoxid-Block und sodann ein Propylenoxid-Block. Auch statistische/random-Verteilungen sind möglich. Bevorzugte Umsetzungsbedingungen sind nachstehend angegeben.

Vorzugsweise wird die Alkoxylierung durch starke Basen katalysiert, die zweckmäßigerweise in Form eines Alkalihydroxids oder Erdalkalihydroxids, in der Regel in einer Menge von 0,1 bis 1 Gew.-%, bezogen auf die Menge des Alkohols R¹-OH, zugesetzt werden, (Vergl. G.Gee et al., J. Chem. Soc. (1961), S. 1345; B. Wojtech, Makromol. Chem. 66, (1966), S.180).

Auch eine saure Katalyse der Additionsreaktion ist möglich. Neben Brönstedsäuren eignen sich auch Lewissäuren, wie AlCl₃ oder BF₃. (Vergl. P.H.Plesch, The Chemistry of Cationic Polymerization, Pergamon Press, New York (1963)).

Die Alkoxylierung kann auch durch Doppelmetallcyanid-Katalysatoren nach dem Fachmann bekannten Methoden durchgeführt werden. Als Doppelmetallcyanid-(DMC)-Verbindung können prinzipiell alle dem Fachmann bekannten geeigneten Verbindungen verwendet werden. Als Katalysator geeignete DMC-Verbindungen sind beispielsweise in der WO 99/16775 und der DE-A-10117273 beschrieben.

Die Additionsreaktion wird bei Temperaturen von etwa 90 bis etwa 240°C, vorzugsweise von 120 bis 180°C, im geschlossenen Gefäß ausgeführt. Das Alkylenoxid oder die Mischung verschiedener Alkylenoxide wird der Mischung aus erfindungsgemäßem Alkohol oder -gemisch und Alkali unter dem bei der gewählten Reaktionstemperatur herrschenden Dampfdruck des Alkylenoxidgemisches zugeführt. Gewünschtenfalls kann das Alkylenoxid mit bis zu etwa 30 bis 60 % mit einem Inertgas verdünnt werden. Dadurch wird eine zusätzliche Sicherheit gegen explosionsartige Polyaddition oder Zersetzung des Alkylenoxids gegeben.

Wird ein Alkylenoxidgemisch eingesetzt, so werden Polyetherketten gebildet, in denen die verschiedenen Alkylenoxidbausteine praktisch statistisch verteilt sind. Variationen in der Verteilung der Bausteine längs der Polyetherkette ergeben sich aufgrund unterschiedlicher Reaktionsgeschwindigkeiten der Komponenten und können auch willkürlich durch kontinuierliche Zufuhr einer Alkylenoxidmischung programmgesteuerter Zusammensetzung erreicht werden. Werden die verschiedenen Alkylenoxide nacheinander zur Reaktion gebracht so erhält man Polyetherketten, mit blockartiger Verteilung der Alkylenoxid-Bausteine.

Die Länge der Polyetherketten schwankt innerhalb des Reaktionsprodukts statistisch um einen Mittelwert, der im Wesentlichen dem sich aus der Zusatzmenge ergebenden stöchiometrischen Wert entspricht.

Zur Herstellung der Verbindungen der allgemeinen Formel (I) können auch Alkylglykolalkoxylate oder -diglykolalkoxylate eingesetzt werden, die erhältlich sind durch Alkoxylierung von entsprechenden optional substituierten Phenyl- oder C₄₋₁₄-Alkylglykolen oder -diglykolen mit C₂₋₉-Alkoxiden, vorzugsweise bis zu einem, mittleren Alkoxylierungsgrad der dem der zuvor genannten Verbindungen der allgemeinen Formel (I) entspricht. Diese werden gegebenenfalls sodann verethert oder verestert, wobei in der endständigen Hydroxylgruppe Wasserstoff durch R³ ersetzt wird.

Die Herstellung erfolgt hier ausgehend von entsprechenden alkoholfreien, vorzugsweise reinen Alkylglykolen und Alkyldiglykolen und nicht, wie vorstehend beschrieben, ausgehend von Alkanolen, durch Alkoxylierung. Daher enthalten die Produktgemische auch keine verbleibenden Alkanole, sondern höchstens Alkylglykole. Es ergibt sich eine für Alkylglykole spezifische Verteilung des Alkoxylierungsgrades. Durch dieses Herstellungsverfahren sind die Alkylglykolalkoxylate frei von Alkoholen.

Alkoxylate sind oligomere oder polymere Umsetzungsprodukte mit Alkoxiden. Aufgrund der dem Fachmann bekannten Kinetik von Polymerisationen kommt es zwangsläufig zu einer statistischen Verteilung von Homologen, deren Mittelwert üblicherweise angegeben wird. Die Häufigkeitsverteilung der Homologen beinhaltet insbesondere bei niedrigen Alkoxylierungsgraden den Ausgangsstoff. Durch die Wahl des Katalysators kann zwar die Verteilung in gewissem Umfang beeinflusst werden, am Prinzip der Verteilungskurve ändert sich aber nichts. Reine Alkyloligoglykole lassen sich nur durch destillative oder chromatographische Aufarbeitung herstellen und sind daher teuer. Außerdem hat sich gezeigt, dass die Verteilung der Homologen einen Einfluss auf das Aggregationsverhalten hat.

Die in dieser Ausführungsform beschriebenen Alkoxylate besitzen die für das Aggregationsverhalten und die anderen erfindungsgemäßen Eigenschaften wichtige Homologenverteilung, ohne Alkohol zu enthalten.

Die nach den anderen Verfahren erhaltenen Produkte werden von verbliebenen Alkoholen befreit. Der Ausdruck "alkoholfrei" bezieht sich auf Alkoxylate, die keine durch Gaschromatographie (GC) messbaren Mengen an Alkanolen, insbesondere R¹-OH, aufweisen. Die Bestimmung der Verteilung der Alkoxyliemngsgrade kann durch chromatographische Verfahren erfolgen. Da in dem durch die beschriebene Ausführungsform erhaltenen Produktgemisch keine Alkohole vorliegen, ist es weitgehend geruchsfrei.

Für einen Vergleich zwischen Alkoholalkoxylaten und Alkylglykolalkoxylaten wird auf WO 03/60049 verwiesen.

Die erfindungsgemäß in der Beschichtungsmittel-Formulierung eingesetzte Mischung (A) enthält neben der zuvor beschriebenen Komponente a2 als Komponente a1 wenigstens ein nichtionischen Tensid ausgewählt aus C₂₋₅-Alkoxylaten von C₉₋₂₀-Alkoholen, die im mittel einen Alkoxylierungsgrad von 3-30 aufweisen.

Tensid ist die Gruppenbezeichnung für grenzflächenaktive Stoffe, Tenside reichern sich an Grenzflächen aus ihrer Lösung stark an und setzen dadurch die Grenzflächenspannung herab. Durch Herabsetzung der Grenzflächenspannung werden nicht mischbare Flüssigkeiten mischbar, flüssige Verunreinigungen und feste Schmutzpartikel werden emulgiert bzw. dispergiert und die Netzung von Flüssigkeiten auf festen Oberflächen verbessert.

Tenside im Sinne dieser Anmeldung sind aufgebaut aus einem hydrophoben Molekülteil und einer hydrophilen Kopfgruppe. Man unterscheidet je nach Art und Ladung der hydrophilen Kopfgruppe zwischen anionischen, nichtionischen, kationischen und amphoteren Tensiden. Anionische und kationische Tenside bilden in wässriger Lösung Ionen, aus amphoteren Tensiden entstehen Zwitterionen. Dagegen erfolgt bei den nichtionischen Tensiden keine elektrolytische Dissoziation in wässriger Lösung.

Gewöhnlich haben Lösungen von Tensiden in Wasser (Konzentration 5 g/l) bei 20 °C eine Grenzflächenspannung von weniger als 45 mN/m. Beispiele für Tenside werden beschrieben bei K. Robert Lange "Surfactants - A Practical Handbook".

Die Tenside sind nichtionische Tenside. In einer weiteren bevorzugten Ausführungsform wird genau ein nichtionisches Tensid eingesetzt. Das bzw. die einsetzbaren nichtionischen Tenside sind ausgewählt aus C₂-C₅-, vorzugsweise C₂-C₄-Alkoxylaten von C₉-C₂₀-, vorzugsweise C₉-C₁₅-, insbesondere C₉-C₁₃-Alkoholen, die im Mittel einen Alkoxylierungsgrad von 3 bis 30, vorzugsweise 4 bis 15, insbesondere bevorzugt 5 bis 12 aufweisen, oder Mischungen davon. Insbesondere werden C₉-C₁₁-Alkohole zum Aufbau der Tenside eingesetzt.

Dabei kann es sich um lineare oder verzweigte Alkohole handeln. Bei einem verzweigten Alkohol liegt der Verzweigungsgrad (entspricht der Anzahl der Methylgruppen im Alkohol minus eins) vorzugsweise im Bereich von 1.1 bis 1.5. Die Alkoxylierung kann mit beliebigen C₂-C₄-Alkoxiden und Gemischen davon erfolgen. So kann mit Ethylenoxid, Propylenoxid oder Butylenoxid alkoxyliert werden. Besonders bevorzugt werden Ethylenoxid, Propylenoxid oder Gemische davon eingesetzt. insbesondere bevorzugt ist Ethylenoxid. Der Alkoxylierungsgrad beträgt im Mittel 4 bis 15, vorzugsweise 5 bis 12. Derartige nichtionische Tenside sind bekannt und beispielsweise in EP-A 0 616 026 und EP-A 0 616 028 beschrieben.

Geeignet für die hier beschriebene Anwendung in Beschichtungsmittel-Formulierungen sind Tenside, die zu einer guten Netzung einer wässrigen Formulierung auf festen Oberflächen führt. Auch bei an sich schon gut netzenden Tensiden wird die Netzfähigkeit durch Zugabe der Komponente a2 noch erhöht. Dies kann beispielsweise durch den Kontaktwinkel auf Edelstahl beschrieben werden. Der Kontaktwinkel einer wässrigen Lösung (0.2 g/l, 23 °C, keine weiteren Additive) eines gut netzenden Tensids auf Edelstahl sollte nach 10 s um mindestens 15° kleiner sein als der Kontaktwinkel reinen Wassers auf derselben Oberfläche. Bevorzugt ist eine Erniedrigung um mindestens 25°, besonders bevorzugt um mindestens 35°. Einige (wenige) Tenside erreichen sogar eine Erniedrigung um mehr als 50°.

Geeignet sind Tenside, die auch gleichzeitig als schaumarm gelten, damit die Tenside selbst nicht durch die Stabilisierung von Schaum zu unerwünschten Effekten, beispielsweise dem Verlust von Glanz eines Lackes führen. Als schaumarm im Sinne der vorliegenden Erfindung werden alle Tenside bezeichnet, die im CNOMO (Zirkulationsschaum-Test nach prEN 14371:2004) in wässriger Lösung eine Schäumfähigkeit von weniger als 1200 ml erreichen. Bevorzugt sollen die Tenside in einer 5%igen Butylglykol-Lösung (5% Butylglykol in Wasser) eine Schaumfähigkeit von weniger als 300 ml erreichen. Insbesondere bevorzugt ist das Schaumvolumen 5 min nach Beendigung der Umwälzung bei Untersuchung der o.g. wässrigen Lösung kleiner als 300 ml und bei Untersuchung der Lösung in 5% Butylglykol kleiner als 50 ml. Gemessen werden jeweils Lösungen in einer Konzentration von 0.1 g Testsubstanz in 1 Liter Lösung bei einer Messtemperatur von 25 °C.

In Mischung (A) beträgt das Verhältnis von Komponente a1 zu Komponente a2 1:4 bis 7:3, besonders bevorzugt liegt mehr Komponente a1 als Komponente a2 in Mischung (A) vor, ganz besonders bevorzugt beträgt das Verhältnis a1 zu a2 von 6 : 4 bis 8 : 2.

In der erfindungsgemäßen Beschichtungsmittel-Formulierung werden schichtbildende Bindemittel und Harze eingesetzt. Bei Lacken sind Bindemittel gemäß DIN 55945 (12/1988) der oder die nichtflüchtigen Anteile (ohne Pigment und Füllstoff, aber einschließlich Weichmachern, Trockenstoffen und anderen nichtflüchtigen Hilfsstoffen), die zum Teil auch aus der Schmelze (bei der Pulverbeschichtung) aufgetragen oder durch Strahlung zur Reaktion gebracht werden; die Bezeichnung für derartige Bindemittel sind in DIN 55950 (04/1978) genormt. Aufgabe der Bindemittel ist die Bindung der Pigmentteilchen untereinander und die Haftung am Untergrund.

Geeignete Bindemittel sind ausgewählt aus der Gruppe bestehend aus Nitrocellulose, Alkydharzen, Polyesterharzen, Melamin-Formaldehyd-Harzen, Acrylharzen, Dispersionen wie wässrige Acrylat-Dispersionen und wässrige Acrylat-Styrol-Dispersionen, wasserlöslichen Alkydharzen, Polyurethan-Harzen, Polymeren aus Vinylchlorid oder Vinylethern, Epoxidacrylaten, Polyesteracrylaten, Polyetheracrylaten, Urethanacrylaten, Aldehyd- und Ketonharzen, Aminoharzen, Carbamid-Harzen, Kasein und Gemischen davon.

In der erfindungsgemäßen Beschichtungsmittel-Formulierung sind optional auch Füllstoffe enthalten. Speziell in Beschichtungsstoffen ist ein Füllstoff nach DIN 55943: 1993-11 und DIN EN 971-1: 1996-09 eine Substanz in körniger oder in Pulverform, die im Anwendungsmedium unlöslich ist und in Beschichtungsstoffen verwendet wird, um bestimmte physikalische Eigenschaften zu erreichen oder zu beeinflussen.

Erfindungsgemäß geeignete Füllstoffe sind beispielsweise Silikate, Aluminium-Silikate (z.B. Kaolin), Schwerspat (Bariumsulfat), Kreide, Talkum, Quarzmehl, Calciumcarbonat, Dolomit, Ca-Bentonit und organische Füllstoffe.

Optional kann die erfindungsgemäße Beschichtungsmittel-Formulierung Pigmente enthalten. Typische Pigmente sind in H. Kittel, Lehrbuch der Lacke und Beschichtungen, Band 2, Verlag W. A. Colomb, ISBN 3-87903-044-8 beschrieben. Sie umfassen beispielsweise Titandioxid, oxidische Mischphasenpigmente, Zinkoxid, Chromoxid, Eisenoxid, Bleimennige, Antimonoxid, Sulfid-Pigmente, Cadmium-Pigmente, Ultramarin-Pigmente, Antimonsulfid, Chromatpigmente, Phosphat-Pigmente, Phosphit-Pigmente, Silikat-Pigmente, Cyanid-Pigmente, Blei- und Plumbat-Pigmente, Bleiantimonat, Calciumplumbat, Mangan-Pigmente, Kobalt-Pigmente, Metallpulver, Magnetische Pigmente, Perlglanzpigmente, oberflächenbehandelte Pigmente, Kernpigmente, Pigmentruße und organische Pigmente.

Optional kann die erfindungsgemäße Beschichtungsmittel-Formulierung weitere Additive enthalten. Übliche Additive, siehe Johan Bielemann "Lackadditive", fallen in die folgenden Klassen:
• Additive, die die Rheologie der Formulierung beeinflussen, beispielsweise Verdicker wie Organoschichtsilikate, Cellulosederivate, Polyurethanverdicker, hydriertes Ricinusöl, Polyamide, Sulfonate, Kieselsäure;
• Grenzflächenaktive Verbindungen wie Netz- und Dispergiermittel (beispielsweise Tenside, Acrylpolymere, Polyurethane), Entschäumer (beispielsweise Silikonöle, Alkoxylate, hydrophobe Kieselsäuren, Harnstoffderivate, Mineralöle, vegetative/tierische Öle, Emulsionen/Dispersionen), Haftvermittler (beispielsweise organofunktionelle Silane, metallorganische Verbindungen wie Titanate, Zirkonate und Zirkon-Aluminate, chlorierte Olefine, Kondensate wie Polyester, Phosphorsäure-Ester, Polyethylenimin, Silikone, silikon-modifizierte Polymere, Talkum) und Netzer (beispielsweise Silikonadditive, Alkoxylate);
• Additive zur Oberflächenmodifizierung (beispielsweise Silikonadditive, Wachse, synthetische Kieselsäuren, natürliche Kieselsäuren, Talkum, Harnstoff-Formaldehyd-Harze);
• Verlauf- und Filmbildehilfsmittel (Polymere wie Polyacrylate oder Celluloseacetobutyrat, Silikone, Fluortenside, Lösungsmittel, Benzine, Ester, Ketone, Etheralkohole, Glykole);
• Katalytisch wirksame Verbindungen (Trockenstoffe, Metallseifen, saure und basische Polymerisationskatalysatoren);
• Hautverhinderungsmittel (beispielsweise Phenole, Oxime, Methylethyloxim, Lösungsmittel, Retentionsmittel);
• Lichtschutzmittel (beispielsweise UV-Absorber wie (2-Hydroxyphenylbenzotriazole, Hydroxyphenyl-s-Triazine, 2-Hydroxybenzophenone, Oxalanilide; Quencher wie organische Nickel-Verbindungen; Radikalfänger wie sterisch gehinderte Amine (HALS), Peroxidzersetzer wie Thioether, Phosphite, HALS);
• Korrosionsinhibitoren;
• Biozide;
• Flammschutz-Mittel;
• Photoinitiatoren (in UV-härtbaren Lacken).

Je nach Art der organischen Bindemittel können die Beschichtungsmittel-Formulierungen optional Lösungsmittel und/oder Wasser enthalten. Bevorzugt enthalten die erfindungsgemäßen Beschichtungsmittel-Formulierungen organische Lösungsmittel und Wasser. Das besonders bevorzugt einsetzbare Lösungsmittelgemisch aus organischem Lösungsmittel und Wasser besteht aus mindestens 50%, besonders bevorzugt mindestens 90% Wasser, jeweils bezogen auf die Gesamtmenge aus Wasser und organischem Lösungsmittel.

Typische organische Lösungsmittel sind ausgewählt aus der Gruppe bestehend aus Butylacetat, Butylglykol, Propylenglykolmethylether, *n*-Butanol, Isopropanol, Xylol, Benzin und Gemischen davon.

Pulverlacke sind im Wesentlichen frei von Lösungsmitteln.

Ein Lack ist ein Anstrichstoff. Nach DIN EN 971-1: 1996-09 ist ein Lack ein flüssiger oder pastenförmiger oder pulverförmiger pigmentierter Beschichtungsstoff, der, auf einen Untergrund aufgebracht, eine deckende Beschichtung mit schützenden, dekorativen oder spezifischen technischen Eigenschaften ergibt. Der Fachausdruck "Lack", ebenso wie "Anstrichstoff", wird für pigmentierte und nicht pigmentierte Beschichtungsstoffe verwendet. Ein nicht pigmentierter Lack wird im Allgemeinen als Klarlack bezeichnet.

Nach DIN EN 971-1: 1996-09 ist ein Beschichtungsstoff ein flüssiges oder pastenförmiges oder pulverförmiges Produkt, das, auf einen Untergrund aufgetragen, eine Beschichtung mit schützenden, dekorativen und/oder anderen spezifischen Eigenschaften ergibt. Der deutsche Fachausdruck "Beschichtungsstoff" im Sinne dieser DIN-Norm ist der Oberbegriff für Lacke, Anstrichstoffe und ähnliche Produkte. Nach DIN EN 971-1: 1996-09 sind Beschichtungsstoffe auch Beschichtungsstoffe zur Herstellung von Kunstharzprodukten, Spachtelmassen, Füllern, Bodenbeschichtungsmassen sowie ähnlichen Stoffen.

"Untergrund" ist die allgemeine Bezeichnung für das Substrat einer Lackschicht bzw. Beschichtungsschicht. Als Untergrund für Bautenlacke und Lasuren kommt jedes Material im Inneren und Äußeren eines Bauwerks in Frage. Beispiele sind Fassaden, Wände, Fenster, Möbel, Putze, Beton, Gips, Böden, Parkett, Kunstharz-Estrich, Tankräume, Metallkonstruktionen und Kunststoffteile.

Anschauliche Definition für Grenzflächenspannung: Die Grenzflächenspannung ist die Spannung, die an der Grenzfläche zwischen zwei nicht mischbaren Stoffen auftritt. Tenside sind in der Lage, sich an der Grenzfläche anzulagern und damit die Grenzflächenspannung herabzusetzen.

Aus der Grenzflächenspannung zwischen einer Flüssigkeit und einem Feststoff resultiert der so genannte Kontaktwinkel. Netzmittel in diesem Zusammenhang sind Substanzen, die in Lösung die Grenzflächenspannung des Wassers oder anderer Flüssigkeiten herabsetzen, so dass diese die Oberflächen von Festkörpern besser erreichen. Dringt die Flüssigkeit nicht in die Oberfläche ein, so führt das Netzmittel zu einer besseren Verteilung der Flüssigkeit auf der Oberfläche, dadurch, dass der Kontaktwinkel erniedrigt wird.

Wichtig für die Anwendung in Beschichtungsmittel-Formulierungen ist das Schaumverhalten der Netzmittel. Um das Schaumverhalten zu charakterisieren, wurde der Zirkulationsschaumtest (CNOMO) ausgewählt. Im Zirkulationsschaumtest gemäß Norm prEN 14371 werden 500 ml Tensidlösung kontinuierlich mit einer Geschwindigkeit von 200 l/h umgepumpt. Der Schaum wird gebildet, da die Lösung aus einer Düse auf die Flüssigkeitsoberfläche fällt. Der Umpumpvorgang (Umwälzung) wird 10 min durchgeführt, wobei alle 30 s das in einem Standzylinder befindliche Schaumvolumen bestimmt wird. Nach 10 min wird der Umpumpvorgang (Umwälzung) abgebrochen und noch weitere 5 min lang alle 30 s das Schaumvolumen bestimmt. Schäumende Tenside erreichen Schaumvolumen von bis zu ≥ 1.5 l (Überschäumen), während schaumarme Tenside Schaumvolumen von weniger als 300 ml erreichen können.

Die vorliegende Erfindung betrifft auch die Verwendung der erfindungsgemäßen Mischung (A) zur Erniedrigung der Grenzflächenspannung in einem Beschichtungsstoff durch Zugabe zu dem Beschichtungsstoff.

In einer besonderen Ausführungsform ist der Beschichtungsstoff eine Lackformulierung. Dabei können alle dem Fachmann bekannten Beschichtungsstoffe eingesetzt werden. Beispielhaft seien genannt: Alkydharz-Lack, Dispersionslackfarben, Epoxidharz-Lack, Polyurethan-Lack, Acrylharz-Lack, Cellulosenitrat-Lack, Spirituslack, Wasserlack, Pulverlack, High-Solid-Lack", thixotroper Lack, Flüssiglack, Spritzlack, Tauchlack, Flutlack, Gießlack, Einbrennlack, Zweikomponenten-Reaktionslack, Hochglanzlack, Seidenglanzlack, Mattlack, Vorlack, Decklack, Einschichtlack, Holzlack, Blechlack, Papierlack, Lederlack, Fensterlack, Bootslack, Möbellack, Autolack, Coil-Coating-Lack.

In einer besonders bevorzugten Ausführungsform enthält die Lackformulierung Wasser, ganz besonders bevorzugt, bezogen auf die Gesamtmenge an organischen Lösungsmitteln und Wasser, enthält die Lackformulierung höchstens 10 Gew.-% organisches Lösungsmittel.

Die vorliegende Erfindung betrifft auch eine Mischung enthaltend als Komponente a1 wenigsten ein nichtionischen Tensid ausgewählt aus Ethoxylaten von C₉₋₂₀-Alhokolen, die im Mittel einen Alkoxylen ungsgrad von 3-30 aufweisen, und als Komponente a2 wenigstens eine Verbindung entsprechend der allgemeinen Formel (I)

R¹-O-(CH₂-CHR²-O)ₙ-(CH₂-CH₂-O)ₘ-R³ (I),

in der
- R¹: optional substituiertes Phenyl, einen Rest abgeleitet von Hexanol, Butanol, Pentanol, Heptanol, Oktanol und mischungen davon
- R²: C₁-C₈-Alkyl,
- R³: Wasserstoff, C₁-C₆-Alkyl, Benzoyl, Acetyl, Acryl, Metacryl,
- n: mittlerer Wert von 0 bis 10,
- m: mittlerer Wert von 1 bis 10, wobei n+m ≤ 10, und m > n ist, bedeuten,
wobei die gegebenenfalls verschiedenen Alkylenoxid-Struktureinheiten statistisch verteilt oder blockweise angeordnet sein können, und die Mischung in einer Konzentration von 0.2 g/l in Wasser bei 23 °C zu einer Erniedrigung des Kontaktwinkels auf Stahl im Vergleich zu reinem Wasser nach 1 s um mindestens 15° führt, und die Mischung im CNOMO (prEN 14371:2004, 0.1 g/l, 25 °C, Messung in Wasser) eine Schäumfähigkeit von weniger als 1200 ml beim Umpumpvorgang besitzt, wobei das Verhältnis von Komponente a1 zu Komponente a2 1:4 bis 7:3 beträgt.

Für R¹, R², R³, n und m gilt das bereits zuvor Gesagte.

### Beispiele:

### Beispiel 1:

### Herstellung von Phenol + 5 EO aus Phenyldiglykol

In einem 2l-Autoklaven wurden 696 g Phenyldiglykol und 3 g KOH-Schuppen vorgelegt. Nach Inertisierung mit Stickstoff wurde 1.5 h bei 20 mbar und 100 °C entwässert. Das Vakuum wurde durch Stickstoff-Zugabe aufgehoben und die Reaktionsmischung auf 150 °C erhitzt. Bei dieser Temperatur wurden unter Rühren 504 g Ethylenoxid zudosiert, nach beendeter Reaktion noch 1 h bei 150 °C gerührt, dann auf 80 °C abgekühlt, und der Autoklav entleert. Abschließend wurde die Reaktionsmischung durch Zugabe von Essigsäure auf einen pH-Wert von 7.0 (gemessen als 5%ige Lösung in Wasser) eingestellt.

**Tabelle 1: Kontaktwinkel zwischen Lösung in Wasser und fester Oberfläche**

| Messtemp. | Produkt | Glas | | | Stahl | | | PE | | |
|---|---|---|---|---|---|---|---|---|---|---|
| | | 0,03s | 0,08s | 1s | 0,03s | 0,08s | 1s | 0,03s | 0,08s | 1s |
| 23 °C | Wasser | | | | 66 | 66 | 66 | | | |
| 40 °C | Wasser | 45 | 43 | 40 | 66 | 66 | 66 | 95 | 94 | 93 |
| 23 °C | Plurafac LF 400 | | | | 50 | 48 | 35 | | | |
| 40 °C | Plurafac LF 400 | | | | 40 | 40 | 28 | | | |
| 23 °C | Plurafac LF 431 | | | | 52 | 51 | 42 | | | |
| 40 °C | Plurafac LF 305 | 41 | 40 | 31 | 46 | 46 | 39 | 58 | 56 | 48 |
| | | | | | | | | | | |
| 23 °C | Lutensol XP 40 | 44 | 42 | 36 | 53 | 52 | 50 | 72 | 70 | 67 |
| 23 °C | Emulan HE 50 | | | | 62 | 62 | 62 | | | |
| 40 °C | Emulan HE 50 | 44 | 42 | 40 | 62 | 62 | 62 | 80 | 80 | 80 |
| 40 °C | Phenol 5 EO | 47 | 44 | 43 | 63 | 62 | 62 | 85 | 83 | 82 |
| | | | | | | | | | | |
| | | | | | | | | | | |
| 23 °C | Surfynol S 104 | | | | 60 | 59 | 59 | | | |
| 40 °C | Surfynol S 104 | 45 | 40 | 38 | 58 | 57 | 57 | 71 | 71 | 71 |
| 23 °C | Dynol 604 | | | | 43 | 42 | 38 | | | |
| 40 °C | Dynol 604 | 45 | 38 | 32 | 42 | 42 | 35 | 53 | 51 | 46 |
| | | | | | | | | | | |
| 23 °C | LF 431 / XP 40 (1/1) | | | | 50 | 49 | 46 | | | |
| 23 °C | LF 431 / HE 50 (7/3) | | | | 47 | 45 | 37 | | | |
| 23 °C | LF 400 / HE 50 (7/3) | | | | 44 | 43 | 38 | | | |
| 40 °C | LF 305 / HE 50 (1/1) | 37 | 36 | 30 | 43 | 43 | 39 | 53 | 52 | 48 |
| 40 °C | LF 400 / HE 50 (1/1) | | | | 37 | 36 | 30 | | | |
| 40 °C | LF 305 / Phenol 5 EO | | | | 44 | 44 | 39 | 57 | 55 | 48 |
| | | | | | | | | | | |
| 23 °C | LF 400 / Phenol 5 EO | | | | 45 | 43 | 37 | | | |
| | | | | | | | | | | |

Der Kontaktwinkel wird zeitaufgelöst gemessen. In Tabelle 1 sind jeweils die Kontaktwinkel auf den drei Materialien Glas, Edelstahl und Polyethylen nach 0.03 s, 0.08 s und 1 s Messzeit angegeben. Die Tenside wurden als Lösung von 0,2 g Produkt in Wasser analysiert. Plurafac, Lutensol und Emulan Marken sind Marken der BASF Aktiengesellschaft. Die beschriebenen Produkte sind kommerziell erhältlich. Surfynol^{®} S 104 und Dynol^{™} 604 sind von der Fa. AirProducts verfügbar. LF 431 wird als Abkürzung für Plurafac LF 431 verwendet, LF 400 und LF 305 analog für Plurafac LF 400 und Plurafac LF 305. HE 50 wird als Abkürzung für Emulan HE 50 verwendet und XP 40 als Abkürzung für Lutensol XP 40.

Die genannten Produkte weisen die folgenden Zusammensetzungen auf:
• Plurafac LF Typen sind schwach schäumende nichtionische Tenside, die aus alkoxylierten Fettalkoholen bestehen. Sie enthalten neben Ethylenoxid noch weitere höhere Alkylenoxide in der Polyetherkette
• Emulan HE 50 ist ein C₄-C₈-Alkohol, der mit 5 Ethylenoxid-Einheiten umgesetzt wurde.
• Lutensol XP 40 ist ein nichtionisches Tensid auf Basis eines C₁₀-Guerbet-Alkohols. Der Alkohol wurde mit 4 Ethylenoxid-Einheiten umgesetzt.

Folgende Ergebnisse lassen sich aus der Tabelle ablesen:
• Die als Komponente a2 eingesetzten Performance-Booster Emulan HE 50, Lutensol XP 40 und die beiden Phenol-Ethoxylate allein führen nur zu einer sehr geringfügigen Reduktion des Kontaktwinkels auf den unterschiedlichen Oberflächen im Vergleich zu reinem Wasser.
• Die Mischungen der Booster, d.h. der Komponente a2, mit den Tensiden Plurafac LF 400, LF 431 und LF 305 führen besonders bei kurzen Kontaktzeiten von weniger als 1 s zu einer deutlichen Verringerung des Kontaktwinkels gegenüber den reinen Tensiden.
• Die Eigenschaften von Verbindungen wie Surfynol und Dynol lassen sich durch Einsatz der Performance-Booster in Kombination mit herkömmlichen nichtionischen Tensiden sogar übertreffen.

Zur Messung des Kontaktwinkels wird das videogestützte Hochgeschwindigkeits-Kontaktwinkelmeßgerät "OCAH 200" der Firma dataphysics verwendet. Die Hochgeschwindigkeitskamera nimmt 360 Bilder pro Sekunde auf, und es wurde zur Messung die Sessile Drop-Methode verwendet. Die betrachteten Oberflächen bestehen aus Polyethylen, Edelstahl und Glas. Die Oberflächen wurden vor jeder Messung von Verunreinigungen befreit. Wenn erforderlich wurde dazu Aceton als Lösungsmittel eingesetzt und die Oberfläche anschließend getrocknet. Bei jeder Messreihe wurde als Referenz der Kontaktwinkel reinen Wassers zum Vergleich bestimmt. Wesentlich ist die Erniedrigung des Kontaktwinkels im Vergleich zu reinem Wasser durch die Zugabe der Prüfsubstanzen.

**Tabelle 2: Kontaktwinkel zwischen Lösung in 5%iger Butylglykol/Wasser-Mischung und fester Oberfläche**

| Produkt | Stahl | | |
|---|---|---|---|
| | 0,03 | 0,08 | 1 |
| 5% Butylglykol | 31 | 31 | 31 |
| Plurafac LF 400 | 29 | 28 | 19 |
| Plurafac LF 431 | 31 | 30 | 20 |
| Surfynol S 104 | 31 | 30 | 30 |
| Dynol 604 | 28 | 28 | 26 |
| | | | |
| LF 431 / HE50 (7/3) | 25 | 24 | 20 |
| LF400/HE50 (7/3) | 22 | 22 | 17 |

Alle Messungen in Tabelle 2 wurden bei 23 °C durchgeführt. Die Produkte wurden in einer Konzentration von 0,2 g/l in einer 5%igen Butylglykol-Lösung in Wasser gemessen.

Zusätzlich zu den bereits oben beschriebenen Effekten erkennt man, dass der Effekt der zugesetzten Booster, der Komponente a2, nicht der Effekt ist, der durch Zugabe eines einfachen Lösungsmittels wie Butylglykol erzielt werden kann. Trotz der vergleichsweise hohen Konzentration von Butylglykol gegenüber Emulan HE 50 in den obigen Experimenten, ist der Effekt der Komponente a2 deutlich zu erkennen.

**Tabelle 3: Oberflächenspannung (OFS) in Wasser**

| | | | OFS [mN/m] | | | |
|---|---|---|---|---|---|---|
| Produkt | gelöst in | Temperatur | 1 s | 0,1 s | 0,01 s | 0,001 s |
| Wasser | Wasser | 23 °C | 71,9 | 71,8 | 71,7 | 71,7 |
| Plurafac LF 400 | Wasser | 23 °C | 33,5 | 43,5 | 56,5 | 65,8 |
| Emulan HE 50 | Wasser | 23 °C | 65,5 | 67,5 | 69,8 | 71,4 |
| LF 400 / HE 50 (1/1) | Wasser | 23 °C | 38,5 | 49,8 | 59,1 | 59,3 |
| 5% Butylglykol | 5% Butylglykol | 23 °C | 37,4 | 37,4 | 37,4 | 37,4 |
| Plurafac LF 400 | 5% Butylglykol | 23 °C | 30,9 | 32,2 | 34,2 | 36,2 |
| LF 400 / HE 50 (7/3) | 5% Butylglykol | 23 °C | 31,8 | 32,3 | 33,4 | 35,1 |
| Plurafac LF 431 | 5% Butylglykol | 23 °C | 31,4 | 33,2 | 35,7 | 38,2 |
| LF 431 / HE 50 (7/3) | 5% Butylglykol | 23 °C | 31,9 | 34,3 | 35,3 | 35,9 |

Die Messungen wurden durchgeführt mit einer Konzentration von 1,0 g des Tensids bzw. der Tensidmischung in 1 l des angegebenen Lösungsmittels. Es wurde zeitaufgelöst die Oberflächenspannung der Lösung mit einem Blasendrucktensiometer bestimmt. Man erkennt auch hier, dass der Booster, Komponente a2 (hier Emulan HE 50), besonders bei kurzen Zeiten dazu in der Lage ist, die Oberflächenspannung abzusenken, wenn er als Additiv zu einem weiteren Tensid verwendet wird. Die Oberflächenspannung bei kurzen Zeiten ist stets niedriger als die des eingesetzten Tensids und gleichzeitig deutlich niedriger als die einer Lösung des Boosters (hier Emulan HE 50).

Auch hier erkennt man wiederum, dass der Effekt auch in Gegenwart eines Lösungsmittels (wie Butylglykol) erkennbar ist.

Die Oberflächenspannungen wurden mit einem Blasendrucktensiometer der Firma Lauda (Modell MPT 2) gemessen.

**Tabelle 4: Schaumverhalten im Zirkulationsschaum-Test (in Anlehnung an prEN 14371:2004)**

| Messung in Wasser als Lösungsmittel | Ergebnisse bei 25 °C, 0,1 g/l | | |
|---|---|---|---|
| | Schäumfähigkeit nach prEN 14371:2004 | Schaum 1 min nach Ende der Umwälzung | Schaum am Test-Ende (15 min) |
| Plurafac LF 431 | 200 ml | 30 ml | 0 |
| Plurafac LF 431 / Emulan HE 50 (7/3) | 260 ml | 40 ml | 0 |
| Pluronic PE 6100 | 180 ml | 0 | 0 |
| Lutensol AO 7 | >1500 ml | 1500 ml | 1500 ml |
| Lutensol TO 8 | >1500 ml | 1500 ml | 1250 ml |
| Lutensol TO 12 | >1500 ml | 1500 ml | 1500 ml |
| Dynol 604 | 260 ml | 40 ml | 40 ml |
| Surfynol S 104 | 160 ml | 0 | 0 |

**Tabelle 5:**

| Messung in einer Mischung aus 5% Butylglykol und 95% Wasser | Ergebnisse bei 25 °C, 0,1 g/l | | |
|---|---|---|---|
| | Schäumfähigkeit nach prEN 14371:2004 | Schaum 1 min nach Ende der Umwälzung | Schaum am Test-Ende (15 min) |
| Plurafac LF 400 | 110 ml | 0 | 0 |
| Plurafac LF 400 / Emulan HE 50 (7/3) | 115 ml | 0 | 0 |
| Plurafac LF 431 | 40 ml | 0 | 0 |
| Plurafac LF 431 / Emulan HE 50 (7/3) | 80 ml | 0 | 0 |
| Pluronic PE 6100 | 180 ml | 0 | 0 |
| Dynol 604 | 90 ml | 0 | 0 |
| Surfynol S 104 | 150 ml | 0 | 0 |

Die Daten in Tabellen 4 und 5 wurden jeweils bei 25 °C und einer Konzentration von 0,1 g/l Prüfsubstanz im jeweiligen Lösungsmittel (Wasser oder 5% Butylglykol) gemessen.

Aus den Daten der Tabellen ist ersichtlich, dass die Formulierungen mit einem Booster (hier Emulan HE 50) beim Schaumverhalten so gut oder sogar besser sind als gängige im Markt bekannte Entschäumer wie Pluronic PE 6100 oder Surfynol S 104. Besonders trifft dies für Messungen zu, die in Anwesenheit eines weiteren Lösungsmittels (wie Butylglykol) durchgeführt werden.

Die Formulierungen mit einer erfindungsgemäßen Komponente a2, einem Booster, sind also auch bezüglich ihres Schaumverhaltens in Coatings-Anwendungen, d.h. Beschichtungsmittel-Formulierungen, einsetzbar.

## Patentansprüche

1. Beschichtungsmittel-Formulierung, enthaltend
(A) 0.001-15 Gew.-% einer Mischung als Komponente (A) enthaltend als Komponente a1 wenigstens ein nichtionisches Tensid ausgewählt aus C₂₋₅-Alkoxylaten von C₉₋₂₀-Alkoholen, die im mittel einen Alkoxylierungsgrad von 3-30 aufweisen, und als Komponente a2 wenigstens eine Verbindung entsprechend der allgemeinen Formel (I)
R¹-O-(CHᵣCHR²-O)ₙ-(CH₂CH₂-O)ₘ-R³ (I),
in der
R¹ optional substituiertes Phenyl, einen Rest abgeleitet von Hexanol, Butanol, Pentanol, Heptanol, Oktanol und mischungen davon,
R² C₁-C₈-Alkyl,
R³ Wasserstoff, C₁-C₆-Alkyl, Benzoyl, Acetyl, Acryl, Metacryl,
n mittlerer Wert von 0 bis 10,
m mittlerer Wert von 1 bis 10, wobei n+m ≤ 10, und m > n ist, bedeuten, wobei die gegebenenfalls verschiedenen Alkylenoxid-Struktureinheiten statistisch verteilt oder blockweise angeordnet sein können,
wobei das Verhältnis von Komponente a1 zu Komponente a2 1:4 bis 7:3 beträgt,
(B) 1-95 Gew.-% schichtbildende Bindemittel und Harze als Komponente (B),
(C) 0-80 Gew-% Füllstoffe als Komponente (C),
(D) 0-40 Gew.-% Pigmente als Komponente (D),
(E) 0-20 Gew.-% Additive als Komponente (E) und
(F) 0-90 Gew.-% organische Lösungsmittel und/oder Wasser als Komponente (F),
wobei die Summe der Gewichtsprozente der Komponenten (A) bis (F) 100 Gew.-% ergibt,
**dadurch gekennzeichnet, dass** die Mischung (A) in einer Konzentration von 0.2 g/l in Wasser bei 23 °C zu einer Erniedrigung des Kontaktwinkels auf Stahl im Vergleich zu reinem Wasser nach 1 s um mindestens 15° führt, und die Mischung im CNOMO (prEN 14371:2004, 0.1 g/l, 25 °C, Messung in Wasser) eine Schäumfähigkeit von weniger als 1200 ml beim Umpumpvorgang besitzt.

2. Formulierung nach Anspruch 1, **dadurch gekennzeichnet, dass** in Mischung (A) als Komponente a1 genau ein Tensid verwendet wird.

3. Formulierung nach Anspruch 1 oder 2, **dadurch gekennzeichnet, dass** in Komponente a2 R³ Wasserstoff bedeutet.

4. Formulierung nach einem der Ansprüche 1 bis 3, **dadurch gekennzeichnet, dass**, wenn in Komponente a2 R¹ Phenyl ist, n = 0 und m = 3 - 9 bedeuten.

5. Formulierung nach einem der Ansprüche 1 bis 4, **dadurch gekennzeichnet, dass**, wenn in Komponente a2 R¹ einen Rest abgeleitet von Hexanol, Butanol, Pentanol, Heptanol, Oktanol und mischungen davon, ist, n ≤ 2 und m = 3 - 6 bedeuten.

6. Verwendung einer Mischung gemäß einem der Ansprüche 1 bis 5 zur Erniedrigung der Grenzflächenspannung in einem Beschichtungsstoff durch Zugabe zu dem Beschichtungsstoff.

7. Verwendung nach Anspruch 6, **dadurch gekennzeichnet, dass** der Beschichtungsstoff eine Lackformuliernung ist.

8. Verwendung nach Anspruch 7, **dadurch gekennzeichnet, dass** die Lackformulierung Wasser enthält.

9. Verwendung nach Anspruch 8, **dadurch gekennzeichnet, dass** die Lackformulierung, bezogen auf die Gesamtmenge an organischen Lösungsmitteln und Wasser, höchstens 10 Gew.-% organisches Lösungsmittel enthält.

10. Mischung, enthaltend als Komponente a1 wenigstens ein nichtioniches Tensid ausgewählt aus Ethoxylaten von C₉₋₂₀-Alkoholen, die im Mittel einer Alkoxylierungsgrad von 3-30 aufweisen, und als Komponente a2 wenigstens eine Verbindung entsprechend der allgemeinen Formel (I)
R¹-O-(CH₂-CHR²-O)ₙ-(CH₂CH₂O)ₘ-R³ (I),
in der
R¹ optional substituiertes Phenyl, einen Rest abgeleitet von Hexanol, Butanol, Pentanol, Heptanol, Oktanol und mischungen davon
R² C₁-C₈-Alkyl,
R³ Wasserstoff, C₁-C₆-Alkyl, Benzoyl, Acetyl, Acryl, Methacryl,
n mittlerer Wert von 0 bis 10,
m mittlerer Wert von 1 bis 10, wobei n+m ≤ 10, und m > n ist, bedeuten, wobei die gegebenenfalls verschiedenen Alkylenoxid-Struktureinheiten statistisch verteilt oder blockweise angeordnet sein können,
**dadurch gekennzeichnet, dass** die Mischung in einer Konzentration von 0.2 g/l in Wasser bei 23 °C zu einer Erniedrigung des Kontaktwinkels auf Stahl im Vergleich zu reinem Wasser nach 1 s um mindestens 15° führt, und die Mischung im CNOMO (prEN 14371:2004, 0.1 g/l, 25 °C, Messung in Wasser) eine Schäumfähigkeit von weniger als 1200 ml beim Umpumpvorgang besitzt, wobei das Verhältnis von Komponente a1 zu Komponente a2 1:4 bis 7:3 beträgt.

## Claims

1. A coating material formulation comprising
(A) 0.001%-15% by weight of a mixture, as component (A), comprising as component a1 at least one nonionic surfactant selected from C₂₋₅ alkoxylates of C₉₋₂₀ alcohols which have on average a degree of alkoxylation of 3-30, and as component a2 at least one compound corresponding to the general formula (I)
R¹-O-(CH₂-CHR²-O)ₙ-(CH₂-CH₂-O)ₘ-R³ (I)
in which
R¹ is optionally substituted phenyl, a radical derived from hexanol, butanol, pentanol, heptanol, octanol and mixtures thereof,
R² is C₁-C₈ alkyl,
R³ is hydrogen, C₁-C₆ alkyl, benzoyl, acetyl, acryloyl or methacryloyl,
n has an average value of 0 to 10,
m has an average value of 1 to 10, where n+m ≤ 10 and m > n, and the alkylene oxide structural units, which are different if appropriate, can be distributed randomly or arranged in blocks,
the ratio of component a1 to component a2 being 1:4 to 7:3,
(B) 1%-95% by weight of film-forming binders and resins as component (B),
(C) 0%-80% by weight of fillers as component (C),
(D) 0%-40% by weight of pigments as component (D),
(E) 0%-20% by weight of additives as component (E), and
(F) 0%-90% by weight of organic solvents and/or water as component (F),
the sum of the weight percentages of components (A) to (F) being 100% by weight,
wherein the mixture (A) at a concentration of 0.2 g/l in water at 23°C leads to a reduction in the contact angle on steel in comparison to pure water after 1 s by at least 15 °, and the mixture in the CNOMO (prEN 14371:2004, 0.1 g/l, 25°C, measurement in water) possesses a foamability of less than 1200 ml during pumped circulation.

2. The formulation according to claim 1, wherein in mixture (A) as component a1 precisely one surfactant is used.

3. The formulation according to claim 1 or 2, wherein in component a2 R³ is hydrogen.

4. The formulation according to any one of claims 1 to 3, wherein, if in component a2 R¹ is phenyl, n = 0 and m = 3-9.

5. The formulation according to any one of claims 1 to 4, wherein, if in component a2 R¹ is a radical derived from hexanol, butanol, pentanol, heptanol, octanol and mixtures thereof, n ≤ 2 and m = 3-6.

6. The use of a mixture according to any one of claims 1 to 5 for lowering the surface tension in a coating material by addition to the coating material.

7. The use according to claim 6, wherein the coating material is a paint formulation.

8. The use according to claim 7, wherein the paint formulation comprises water.

9. The use according to claim 8, wherein the paint formulation, based on the total amount of organic solvents and water, comprises not more than 10% by weight of organic solvent.

10. A mixture comprising as component a1 at least one nonionic surfactant selected from ethoxylates of C₉₋₂₀ alcohols which have on average a degree of alkoxylation of 3-30, and as component a2 at least one compound corresponding to the general formula (I)
R¹-O-(CH₂-CHR²-O)ₙ-(CH₂-CH₂-O)ₘ-R³ (I)
in which
R¹ is optionally substituted phenyl, a radical derived from hexanol, butanol, pentanol, heptanol, octanol and mixtures thereof,
R² is C₁-C₈ alkyl,
R³ is hydrogen, C₁-C₆ alkyl, benzoyl, acetyl, acryloyl or methacryloyl,
n has an average value of 0 to 10,
m has an average value of 1 to 10, where n+m ≤ 10 and m > n, and the alkylene oxide structural units, which are different if appropriate, can be distributed randomly or arranged in blocks,
wherein the mixture at a concentration of 0.2 g/l in water at 23°C leads to a reduction in the contact angle on steel in comparison to pure water after 1 s by at least 15°, and the mixture in the CNOMO (prEN 14371:2004, 0.1 g/l, 25°C, measurement in water) possesses a foamability of less than 1200 ml during pumped circulation, the ratio of component a1 to component a2 being 1:4 to 7:3.

## Revendications

1. Formulation d'agent de revêtement, contenant
(A) 0,001-15% en poids d'un mélange comme composant (A), contenant, comme composant a1, au moins un agent tensioactif non ionique choisi parmi les alcoxylates en C₂₋₅ d'alcools en C₉₋₂₀ qui présentent en moyenne un degré d'alcoxylation de 3-30, et comme composant a2 au moins un composé correspondant à la formule générale (I)
R¹-O-(CH₂-CHR²-O)ₙ-(CH₂-CH₂-O)ₘ-R³ (I)
dans laquelle
R¹ représente phényle éventuellement substitué, un radical dérivé d'hexanol, de butanol, de pentanol, d'heptanol, d'octanol et de leurs mélanges
R² représente C₁-C₈-alkyle,
R³ représente hydrogène, C₁-C₆-alkyle, benzoyle, acétyle, acryle, méthacryle,
n représente une valeur moyenne de 0 à 10,
m représente une valeur moyenne de 1 à 10, où n+m ≤ 10, et m > n, où les unités de structure oxyde d'alkylène le cas échéant différentes peuvent être réparties statistiquement ou disposées par blocs
où le rapport du composé a1 au composant a2 est de 1:4 à 7:3,
(B) 1-95% en poids d'agents liants et de résines formant une couche comme composant (B),
(C) 0-80% en poids de charges comme composant (C),
(D) 0-40% en poids de pigments comme composant (D),
(E) 0-20% en poids d'additifs comme composant (E) et
(F) 0-90% en poids de solvants organiques et/ou d'eau comme composant (F),
où la somme des pour-cent en poids des composants (A) à (F) est égale à 100% en poids,
**caractérisée en ce que** le mélange (A) en une concentration de 0,2 g/l dans l'eau à 23°C conduit à une diminution de l'angle de contact sur l'acier par rapport à l'eau pure, après 1 s, d'au moins 15°, et que le mélange présente dans CNOMO (prEN 14371:2004, 0,1 g/l, 25°C, mesure dans l'eau) une aptitude au moussage inférieure à 1200 ml lors du processus de pompage.

2. Formulation selon la revendication 1, **caractérisée en ce qu'**on utilise dans le mélange (A) comme composant a1 exactement un agent tensioactif.

3. Formulation selon la revendication 1 ou 2, **caractérisée en ce que** dans le composant a2 R³ signifie hydrogène.

4. Formulation selon l'une quelconque des revendications 1 à 3, **caractérisée, en ce que**, lorsque dans le composant a2, R¹ représente phényle, n = 0 et m = 3 - 9.

5. Formulation selon l'une quelconque des revendications 1 à 4, **caractérisée, en ce que**, lorsque dans le composant a2, R¹ est un radical dérivé d'hexanol, de butanol, de pentanol, d'heptanol, d'octanol et de leurs mélanges, n ≤ 2 et m = 3 - 6.

6. Utilisation d'un mélange selon l'une quelconque des revendications 1 à 5 pour la diminution de la tension superficielle dans un matériau de revêtement par addition au matériau de revêtement.

7. Utilisation selon la revendication 6, **caractérisée en ce que** le matériau de revêtement est une formulation de type laque.

8. Utilisation selon la revendication 7, **caractérisée en ce que** la formulation de type laque contient de l'eau.

9. Utilisation selon la revendication 8, **caractérisée en ce que** la formulation de type laque, par rapport à la quantité totale de solvant organique et d'eau, contient au plus 10% en poids de solvant organique.

10. Mélange, contenant comme composant a1, au moins un agent tensioactif non ionique choisi parmi les éthoxylates d'alcools en C₉₋₁₀ qui présentent en moyenne un degré d'alcoxylation de 3-30, et comme composant a2 au moins un composé correspondant à la formule générale (I)
R¹-O-(CH₂-CHR²-O)ₙ-(CH₂-CH₂-O)ₘ-R³ (I)
dans laquelle
R¹ représente phényle éventuellement substitué, un radical dérivé d'hexanol, de butanol, de pentanol, d'heptanol, d'octanol et de leurs mélanges
R² représente C₁-C₈-alkyle,
R³ représente hydrogène, C₁-C₆-alkyle, benzoyle, acétyle, acryle, méthacryle,
n représente une valeur moyenne de 0 à 10,
m représente une valeur moyenne de 1 à 10, où n+m ≤ 10, et m > n, où les unités de structure oxyde d'alkylène le cas échéant différentes peuvent être réparties statistiquement ou disposées par blocs,
**caractérisé en ce que** le mélange (A) en une concentration de 0,2 g/l dans l'eau à 23°C conduit à une diminution de l'angle de contact sur l'acier par rapport à l'eau pure, après 1 s, d'au moins 15°, et que le mélange présente dans CNOMO (prEN 14371:2004, 0,1 g/l, 25°C, mesure dans l'eau) une aptitude au moussage inférieure à 1200 ml lors du processus de pompage, le rapport du composant a1 au composant a2 étant de 1:4 à 7:3.
